# EUROPEAN PATENT APPLICATION

(11) **EP 4 645 475 A1**
(43) Date of publication of application: **05.11.2025**
(21) Application number: 23911505.8
(22) Date of filing: 28.11.2023
(51) Int. Cl.: H01M 4/66, H01G 11/06, H01G 11/28, H01M 4/02, H01M 4/13

(54) **ADHESIVE COATING FOR ELECTROCHEMICAL ELEMENT, CURRENT COLLECTOR PROVIDED WITH ADHESIVE LAYER, ELECTRODE FOR ELECTROCHEMICAL ELEMENT, AND ELECTROCHEMICAL ELEMENT**

(30) Priority: 26.12.2022 JP 2022208628
(71) Applicant: Zeon Corporation, Tokyo 100-8246 (JP)
(72) Inventor: HARADA, Ayumi, Tokyo 100-8246 (JP)
(74) Representative: Maiwald GmbH
(86) International application number: PCT/JP2023/042607
(87) International publication number: WO 2024/142724

(57) **Abstract**

Provided is a new technique that can ensure high-speed formability during electrode production by powder forming while also causing an electrochemical device to display excellent rate characteristics. An adhesive coating liquid for an electrochemical device contains an adhesive and water. The adhesive includes a particulate polymer X having a degree of swelling in electrolyte solution, by mass, of not less than ×1.0 and not more than ×3.0. The adhesive coating liquid for an electrochemical device has a tack strength of 0.50 N or more as measured using a tackiness tester.

## Description

### TECHNICAL FIELD

The present disclosure relates to an adhesive coating liquid for an electrochemical device, an adhesive layer-equipped current collector, an electrode for an electrochemical device, and an electrochemical device.

### BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide variety of applications. Therefore, improvements to electrodes of electrochemical devices have been studied in recent years with the aim of further increasing the performance of electrochemical devices.

An electrode used in an electrochemical device typically has a structure in which an electrode mixed material layer where components such as an electrode active material are bound by a binder for a mixed material layer is stacked on a current collector. One known method of forming an electrode mixed material layer on a current collector is a method in which a powder material such as composite particles obtained through granulation of an electrode active material and a binder for a mixed material layer is pressure formed on a current collector.

However, electrode mixed material layers that are obtained through pressure forming of composite particles on a current collector in this manner have suffered from a problem that it is difficult to achieve close adherence to the current collector. For this reason, a technique that involves applying an adhesive coating liquid onto the surface of a current collector to provide an adhesive layer in advance of electrode mixed material layer formation and then pressure forming a powder material on the adhesive layer to ensure close adherence of an electrode mixed material layer and the current collector via the adhesive layer has become conventionally adopted (for example, refer to Patent Literature (PTL) 1 to 3).

### CITATION LIST

### Patent Literature

PTL 1: JP2015-138687A
PTL 2: WO2015/115177A1
PTL 3: JP2016-115603A

### SUMMARY

### (Technical Problem)

It is desirable for an electrode that is used in an electrochemical device to cause the electrochemical device including that electrode to display excellent rate characteristics. In addition, increasing demand for electrochemical devices in recent years has been accompanied by increasing necessity for producing electrodes at high speed. However, in high-speed electrode production using the conventional powder forming technique described above, the formation of defects in an electrode mixed material layer of an obtained electrode due to non-uniform distribution (uneven stacking thickness) of composite particles at an adhesive layer surface has been problematic.

In other words, the conventional technique described above leaves room for further improvement in terms of increasing high-speed formability during electrode production by powder forming while also improving rate characteristics of an electrochemical device.

Accordingly, an object of the present disclosure is to provide a new technique that can ensure high-speed formability during electrode production by powder forming while also causing an electrochemical device to display excellent rate characteristics.

### (Solution to Problem)

The inventor conducted diligent investigation with the aim of solving the problems set forth above. First, the inventor focused on an adhesive layer that is disposed between a current collector and an electrode mixed material layer. The inventor discovered that by forming the adhesive layer using an adhesive coating liquid that contains a particulate polymer having a degree of swelling in electrolyte solution within a specific range as an adhesive and that also has a tack strength measured by a probe tack method of not less than a specific value, it is possible to inhibit the formation of defects in an electrode even in a situation which a high-speed line is adopted in electrode production using a powder forming technique while also causing an electrochemical device to display excellent rate characteristics using this electrode. In this manner, the inventor completed the present disclosure.

Specifically, with the aim of advantageously solving the problems set forth above, adhesive coating liquids for an electrochemical device according to the following { 1 } and {2}, an adhesive layer-equipped current collector according the following {3}, electrodes for an electrochemical device according to the following {4} and {5}, and an electrochemical device according to the following {6} are provided according to the present disclosure.
{1} An adhesive coating liquid for an electrochemical device comprising an adhesive and water, wherein
   the adhesive includes a particulate polymer X having a degree of swelling in electrolyte solution, by mass, of not less than × 1.0 and not more than ×3.0, and
   the adhesive coating liquid for an electrochemical device has a tack strength of 0.50 N or more as measured using a tackiness tester, where the tack strength is a value measured by:
      applying the adhesive coating liquid for an electrochemical device onto one surface of copper foil such as to have a mass per unit area of 0.060 mg/cm²;
      drying the adhesive coating liquid for an electrochemical device that has been applied onto the copper foil at 120°C for 1 second; and
      after the drying, pressing a stainless steel probe of 5 mm in diameter of the tackiness tester against the surface of the copper foil where the adhesive coating liquid for an electrochemical device has been applied under conditions of an atmosphere temperature of 25°C, a pressing rate of 1 mm/s, a pressing load of 2.5 MPa, and a pressing holding time of 10 seconds in a state in which a natural rubber sheet having a durometer hardness of A70 according to JIS K 6253-3 and a thickness of 3 mm is laid underneath the copper foil.

By using an adhesive coating liquid that contains a particulate polymer X having a degree of swelling in electrolyte solution within the range set forth above as an adhesive and that also has a tack strength measured by a probe tack method under the conditions set forth above of not less than the value set forth above, it is possible to form an adhesive layer that can ensure high-speed formability during electrode production by powder forming and that can cause an electrochemical device to display excellent rate characteristics.

The "particulate polymer" referred to in the present specification is a water-insoluble polymer that displays a particulate form in water. Note that when a polymer is said to be "water-insoluble" in the present specification, this means that when 0.5 g of the polymer is dissolved in 100 g of water at a temperature of 25°C, insoluble content is 90 mass% or more.

The "degree of swelling in electrolyte solution" of a polymer referred to in the present specification can be measured by a method described in the EXAMPLES section.

The tack strength referred to in the present specification is measured by the method set forth above and, more specifically, can be measured by a method described in the EXAMPLES section. Note that the term "mass per unit area" as used in the present specification refers to the mass in terms of solid content per unit area of a coating material such as an adhesive coating liquid on an application target (for example, a current collector such as copper foil).

{2} The adhesive coating liquid for an electrochemical device according to the foregoing {1}, wherein the particulate polymer X has a glass-transition temperature of not lower than -40°C and not higher than 10°C.

When the glass-transition temperature of the particulate polymer X used as the adhesive is within the range set forth above, even better high-speed formability during electrode production by powder forming can be achieved while also obtaining an adhesive layer having excellent adhesiveness after electrolyte solution immersion. Moreover, cycle characteristics of an electrochemical device can be enhanced while also even further improving rate characteristics of the electrochemical device.

{3} An adhesive layer-equipped current collector comprising: a current collector; and an adhesive layer formed on the current collector, wherein the adhesive layer is formed using the adhesive coating liquid for an electrochemical device according to the foregoing {1} or {2}.

By using an adhesive layer-equipped current collector that includes an adhesive layer formed using any one of the adhesive coating liquids for an electrochemical device set forth above and a current collector, it is possible to produce an electrode that can ensure high-speed formability during electrode production by powder forming and that can cause an electrochemical device to display excellent rate characteristics.

{4} An electrode for an electrochemical device comprising: the adhesive layer-equipped current collector according to the foregoing {3}; and an electrode mixed material layer formed on a surface of the adhesive layer-equipped current collector where the adhesive layer is present, wherein the electrode mixed material layer contains an electrode active material and a binder for a mixed material layer.

Through an electrode in which an electrode mixed material layer is stacked on the surface of the adhesive layer of the adhesive layer-equipped current collector set forth above, it is possible to cause an electrochemical device to display excellent rate characteristics.
{5} The electrode for an electrochemical device according to the foregoing {4}, wherein the electrode mixed material layer is formed using composite particles that contain the electrode active material and the binder for a mixed material layer.
{6} An electrochemical device comprising the electrode for an electrochemical device according to the foregoing {4} or {5}.

An electrochemical device that includes the electrode set forth above has excellent rate characteristics.

### (Advantageous Effect)

Through a presently disclosed adhesive coating liquid, it is possible to provide an adhesive layer and an adhesive layer-equipped current collector that can ensure high-speed formability during electrode production by powder forming and that can cause an electrochemical device to display excellent rate characteristics.

Through a presently disclosed electrode for an electrochemical device, it is possible to cause an electrochemical device to display excellent rate characteristics.

A presently disclosed electrochemical device has excellent rate characteristics.

### BRIEF DESCRIPTION OF THE DRAWINGS

In the accompanying drawings:

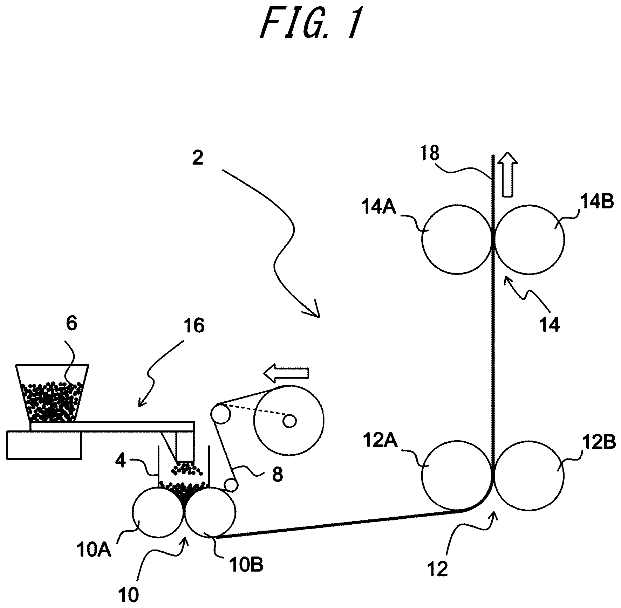

FIG. 1 is a schematic view of a pressure forming apparatus that is used in formation of an electrode using composite particles.

### DETAILED DESCRIPTION

The following provides a detailed description of embodiments of the present disclosure.

A presently disclosed adhesive coating liquid for an electrochemical device can be used in formation of an adhesive layer that is provided between an electrode mixed material layer and a current collector in order to increase close adherence thereof. Moreover, a presently disclosed adhesive layer-equipped current collector is a current collector that includes an adhesive layer formed using the presently disclosed adhesive coating liquid for an electrochemical device at one surface or both surfaces thereof. Furthermore, a presently disclosed electrode for an electrochemical device is an electrode in which an electrode mixed material layer is stacked on the presently disclosed adhesive layer-equipped current collector. Also, a presently disclosed electrochemical device is an electrochemical device that includes the presently disclosed electrode for an electrochemical device.

### (Adhesive coating liquid for electrochemical device)

The presently disclosed adhesive coating liquid contains at least an adhesive that includes a particulate polymer X and water that serves as a dispersion medium and optionally contains other components.

In the presently disclosed adhesive coating liquid, the particulate polymer X has a degree of swelling in electrolyte solution, by mass, of not less than ×1.0 and not more than ×3.0, and the tack strength of the presently disclosed adhesive coating liquid as measured using a tackiness tester is 0.50 N or more. Moreover, by using the presently disclosed adhesive coating liquid, it is possible to form an adhesive layer that can ensure high-speed formability during electrode production by powder forming and that can cause an electrochemical device to display excellent rate characteristics.

### <Adhesive>

The adhesive includes a particulate polymer X. Note that the presently disclosed adhesive coating liquid may contain a polymer other than the particulate polymer X that can be used as an adhesive without any specific limitations so long as the tack strength of the presently disclosed adhesive coating liquid is not less than a specific value.

### <<Particulate polymer X>>

The particulate polymer X is a polymer that has adhesive capability and is a component that can prevent shedding (dusting) of composite particles from an adhesive layer during production of an electrode and that, in particular, can ensure close adherence of an electrode mixed material layer and a current collector inside of an electrochemical device after electrode production.

Note that the presently disclosed adhesive coating liquid may contain just one type of particulate polymer X as the adhesive or may contain two or more types of particulate polymers X as the adhesive.

### {Degree of swelling in electrolyte solution}

The degree of swelling in electrolyte solution, by mass, of the particulate polymer X is required to be not less than ×1.0 and not more than ×3.0, is preferably ×1.5 or more, and is preferably ×2.0 or less. In a situation in which the degree of swelling in electrolyte solution exceeds ×3.0, rate characteristics deteriorate, presumably due to reduction of conductivity of charge carriers (for example, lithium ions) and increased resistance inside of an electrochemical device caused by excessive swelling of the particulate polymer X. Note that it is difficult to envisage the use of a polymer that shrinks upon immersion in electrolyte solution (i.e., a polymer that does not have affinity with electrolyte solution) as an adhesive and that the degree of swelling in electrolyte solution of the particulate polymer X is × 1.0 or more. Moreover, through the degree of swelling in electrolyte solution of the particulate polymer X being ×1.0 or more, adhesiveness of the adhesive after electrolyte solution immersion increases, and cycle characteristics of an electrochemical device improve. Furthermore, when the degree of swelling in electrolyte solution of the particulate polymer X is × 1.0 or more, this enables good penetration of electrolyte solution into an electrode when the electrolyte solution is injected into a casing housing battery members such as the electrode inside thereof during electrochemical device production (i.e., this improves electrolyte solution injectability).

Note that the degree of swelling in electrolyte solution of the particulate polymer X can be adjusted by altering the type and/or proportional content of a monomer, the amount of a polymerization initiator, or the amount of a molecular weight modifier used to produce the particulate polymer X, for example.

### {Glass-transition temperature}

The glass-transition temperature of the particulate polymer X is preferably -40°C or higher, and is preferably 10°C or lower, more preferably 0°C or lower, and even more preferably -20°C or lower. When the glass-transition temperature of the particulate polymer X is -40°C or higher, even better high-speed formability during electrode production by powder forming can be achieved. Moreover, cycle characteristics of an electrochemical device can be enhanced while also even further improving rate characteristics of the electrochemical device. On the other hand, when the glass-transition temperature of the particulate polymer X is 10°C or lower, even better high-speed formability during electrode production by powder forming can be achieved while also obtaining an adhesive layer having excellent adhesiveness after electrolyte solution immersion. Moreover, cycle characteristics of an electrochemical device can be enhanced while also even further improving rate characteristics of the electrochemical device.

Note that the glass-transition temperature of the particulate polymer X can be adjusted by altering the type and/or proportional content of a monomer, the amount of a polymerization initiator, or the amount of a molecular weight modifier used to produce the particulate polymer X, for example.

### {Chemical composition}

No specific limitations are placed on the chemical composition of the particulate polymer X so long as it has a degree of swelling in electrolyte solution that is within a specific range and can form an adhesive layer resulting in a tack strength that is not less than a specific value. The particulate polymer X can, for example, be either or both of a polymer including a (meth)acrylic acid ester monomer unit (acrylic polymer) and a polymer including an aliphatic conjugated diene monomer unit (diene polymer), and is preferably an acrylic polymer.

In the present specification, "(meth)acryl" is used to indicate "acryl and/or methacryl".

The phrase "includes a monomer unit" as used in the present specification means that "a polymer obtained with the monomer includes a repeating unit derived from the monomer".

Specifically, it is preferable that the particulate polymer X includes at least a (meth)acrylic acid ester monomer unit and also includes one or more selected from the group consisting of an aromatic vinyl monomer unit, an acidic group-containing monomer unit, and a cross-linkable monomer unit.

Examples of (meth)acrylic acid ester monomers that can form a (meth)acrylic acid ester monomer unit in the particulate polymer X include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One of these (meth)acrylic acid ester monomers may be used individually, or two or more of these (meth)acrylic acid ester monomers may be used in combination in a freely selected ratio.

Of these (meth)acrylic acid ester monomers, 2-ethylhexyl acrylate is preferable from a viewpoint of good control of the degree of swelling in electrolyte solution of the particulate polymer X and the tack strength of the adhesive coating liquid, and also further improvement of high-speed formability during electrode production by powder forming and rate characteristics of an electrochemical device.

The proportion constituted by (meth)acrylic acid ester monomer units included in the particulate polymer X when all repeating units in the particulate polymer X are taken to be 100 mass% is preferably 40 mass% or more, more preferably 50 mass% or more, even more preferably 55 mass% or more, and particularly preferably 60 mass% or more, and is preferably 90 mass% or less, more preferably 85 mass% or less, even more preferably 80 mass% or less, and particularly preferably 75 mass% or less. When the proportional content of (meth)acrylic acid ester monomer units in the particulate polymer X is 40 mass% or more, even better high-speed formability during electrode production by powder forming can be achieved. Moreover, cycle characteristics of an electrochemical device can be enhanced while also even further improving rate characteristics of the electrochemical device. On the other hand, when the proportional content of (meth)acrylic acid ester monomer units in the particulate polymer X is 90 mass% or less, cycle characteristics of an electrochemical device can be enhanced while also even further improving rate characteristics of the electrochemical device.

The proportional content of each monomer unit in a polymer such as the particulate polymer X referred to in the present specification can be measured by nuclear magnetic resonance (NMR) methods such as ¹H-NMR and ¹³C-NMR.

Examples of aromatic vinyl monomers that can form an aromatic vinyl monomer unit in the particulate polymer X include styrene, α-methylstyrene, and vinyltoluene. One of these aromatic vinyl monomers may be used individually, or two or more of these aromatic vinyl monomers may be used in combination in a freely selected ratio.

Of these aromatic vinyl monomers, styrene is preferable from a viewpoint of good control of the degree of swelling in electrolyte solution of the particulate polymer X and the tack strength of the adhesive coating liquid, and also further improvement of high-speed formability during electrode production by powder forming and rate characteristics of an electrochemical device.

The proportion constituted by aromatic vinyl monomer units included in the particulate polymer X when all repeating units in the particulate polymer X are taken to be 100 mass% is preferably 5 mass% or more, more preferably 10 mass% or more, even more preferably 15 mass% or more, and particularly preferably 20 mass% or more, and is preferably 50 mass% or less, more preferably 45 mass% or less, even more preferably 40 mass% or less, and particularly preferably 35 mass% or less. When the proportional content of aromatic vinyl monomer units in the particulate polymer X is 5 mass% or more, cycle characteristics of an electrochemical device can be enhanced while also even further improving rate characteristics of the electrochemical device. On the other hand, when the proportional content of aromatic vinyl monomer units in the particulate polymer X is 50 mass% or less, even better high-speed formability during electrode production by powder forming can be achieved. Moreover, cycle characteristics of an electrochemical device can be enhanced while also even further improving rate characteristics of the electrochemical device.

Examples of acidic group-containing monomers that can form an acidic group-containing monomer unit in the particulate polymer X include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, and fluoromaleic acid.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer.

Examples of sulfo group-containing monomers include styrene sulfonic acid, vinyl sulfonic acid, methyl vinyl sulfonic acid, (meth)allyl sulfonic acid, 3-allyloxy-2-hydroxypropane sulfonic acid, and 2-acrylamido-2-methylpropane sulfonic acid.

In the present specification, "(meth)allyl" is used to indicate "allyl and/or methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present specification, "(meth)acryloyl" is used to indicate "acryloyl and/or methacryloyl".

One acidic group-containing monomer may be used individually, or two or more acidic group-containing monomers may be used in combination in a freely selected ratio. From a viewpoint of good control of the degree of swelling in electrolyte solution of the particulate polymer X and the tack strength of the adhesive coating liquid, and also further improvement of high-speed formability during electrode production by powder forming and rate characteristics of an electrochemical device, carboxy group-containing monomers are preferable, and acrylic acid and methacrylic acid are more preferable as acidic group-containing monomers.

The proportion constituted by acidic group-containing monomer units included in the particulate polymer X when all repeating units in the particulate polymer X are taken to be 100 mass% is preferably 0.5 mass% or more, more preferably 1 mass% or more, and even more preferably 2 mass% or more, and is preferably 10 mass% or less, more preferably 8 mass% or less, and even more preferably 6 mass% or less. When the proportion constituted by acidic group-containing monomer units in the particulate polymer X is within any of the ranges set forth above, even better high-speed formability during electrode production by powder forming can be achieved while also obtaining an adhesive layer having excellent adhesiveness after electrolyte solution immersion. Moreover, cycle characteristics of an electrochemical device can be enhanced while also even further improving rate characteristics of the electrochemical device.

From a viewpoint of good control of the degree of swelling in electrolyte solution of the particulate polymer X and the tack strength of the adhesive coating liquid, and also further improvement of high-speed formability during electrode production by powder forming and rate characteristics of an electrochemical device, polyethylenically unsaturated cross-linkable monomers and epoxy/N-methylol cross-linkable monomers are preferable as cross-linkable monomers that can form a cross-linkable monomer unit in the particulate polymer X. In other words, the particulate polymer X preferably includes either or both of a polyethylenically unsaturated cross-linkable monomer unit and an epoxy/N-methylol cross-linkable monomer unit as a cross-linkable monomer unit.

A polyethylenically unsaturated cross-linkable monomer is a compound that includes at least two ethylenically unsaturated bonds. Examples of polyethylenically unsaturated cross-linkable monomers include polyfunctional (meth)acrylates such as allyl (meth)acrylate, ethylene glycol di(meth)acrylate, diethylene glycol di(meth)acrylate, triethylene glycol di(meth)acrylate, tetraethylene glycol di(meth)acrylate, and trimethylolpropane tri(meth)acrylate; polyfunctional allyl/vinyl ethers such as dipropylene glycol diallyl ether, polyglycol diallyl ether, triethylene glycol divinyl ether, hydroquinone diallyl ether, and tetraallyloxyethane; and divinylbenzene. One of these polyethylenically unsaturated cross-linkable monomers may be used individually, or two or more of these polyethylenically unsaturated cross-linkable monomers may be used in combination in a freely selected ratio.

Of these polyethylenically unsaturated cross-linkable monomers, allyl (meth)acrylate is preferable from a viewpoint of good control of the degree of swelling in electrolyte solution of the particulate polymer X and the tack strength of the adhesive coating liquid, and also further improvement of high-speed formability during electrode production by powder forming and rate characteristics of an electrochemical device, and allyl methacrylate is more preferable.

In the present specification, "(meth)acrylate" is used to indicate "acrylate and/or methacrylate".

Note that in the present specification, a compound that includes either or both of an epoxy group and an N-methylol group and that also includes at least two ethylenically unsaturated bonds is considered to correspond to a subsequently described "epoxy/N-methylol cross-linkable monomer" rather than a "polyethylenically unsaturated cross-linkable monomer".

Any compound that includes either or both of an epoxy group and an N-methylol group and that is copolymerizable with another monomer may be used without any specific limitations as an epoxy/N-methylol cross-linkable monomer.

For example, a compound that includes either or both of an epoxy group and an N-methylol group and that also includes one ethylenically unsaturated bond or two or more ethylenically unsaturated bonds is preferable as an epoxy/N-methylol cross-linkable monomer. More specifically, allyl glycidyl ether, N-methylol (meth)acrylamide, glycidyl (meth)acrylate, or the like is suitable as an epoxy/N-methylol cross-linkable monomer. One of these epoxy/N-methylol cross-linkable monomers may be used individually, or two or more of these epoxy/N-methylol cross-linkable monomers may be used in combination in a freely selected ratio.

Of these epoxy/N-methylol cross-linkable monomers, allyl glycidyl ether is more preferable from a viewpoint of good control of the degree of swelling in electrolyte solution of the particulate polymer X and the tack strength of the adhesive coating liquid, and also further improvement of high-speed formability during electrode production by powder forming and rate characteristics of an electrochemical device.

The proportion constituted by cross-linkable monomer units included in the particulate polymer X when all repeating units in the particulate polymer X are taken to be 100 mass% is preferably 0.5 mass% or more, more preferably 1 mass% or more, and even more preferably 1.5 mass% or more, and is preferably 4 mass% or less, more preferably 3 mass% or less, and even more preferably 2.5 mass% or less. When the proportional content of cross-linkable monomer units in the particulate polymer X is 0.5 mass% or more, formability of a mixed material layer on the surface of an adhesive layer can be further improved, presumably due to there being a better balance of viscosity and elasticity displayed by the particulate polymer X and increased tack strength. Moreover, cycle characteristics of an electrochemical device can be enhanced while also further improving rate characteristics of the electrochemical device. On the other hand, when the proportional content of cross-linkable monomer units in the particulate polymer X is 4 mass% or less, adhesiveness of an adhesive layer after electrolyte solution immersion and electrolyte solution injectability during electrochemical device production can be increased, presumably due to the particulate polymer not becoming excessively rigid and the degree of swelling in electrolyte solution thereof increasing to a suitable degree. Moreover, cycle characteristics of an electrochemical device can be improved.

From a viewpoint of good control of the degree of swelling in electrolyte solution of the particulate polymer X and the tack strength of the adhesive coating liquid, and also further improvement of high-speed formability during electrode production by powder forming and rate characteristics of an electrochemical device, it is preferable that the particulate polymer X includes both a polyethylenically unsaturated cross-linkable monomer unit and an epoxy/N-methylol cross-linkable monomer unit.

In a case in which the particulate polymer X includes both a polyethylenically unsaturated cross-linkable monomer unit and an epoxy/N-methylol cross-linkable monomer unit, a ratio, by mass, of the proportional content of epoxy/N-methylol cross-linkable monomer units relative to the proportional content of polyethylenically unsaturated cross-linkable monomer units in the particulate polymer X is preferably 1 or more, more preferably 2 or more, and even more preferably 4 or more, and is preferably 15 or less, more preferably 10 or less, and even more preferably 7 or less. When the ratio of the proportional content of epoxy/N-methylol cross-linkable monomer units relative to the proportional content of polyethylenically unsaturated cross-linkable monomer units is within any of the ranges set forth above, even better high-speed formability during electrode production by powder forming can be achieved. Moreover, adhesiveness of an adhesive layer after electrolyte solution immersion and electrolyte solution injectability during electrochemical device production can be increased, and cycle characteristics of an electrochemical device can be enhanced while also even further improving rate characteristics of the electrochemical device.

### {Production method}

No specific limitations are placed on the method by which the particulate polymer X is produced. For example, the particulate polymer X can be produced through polymerization, in water, of a monomer composition that contains the monomers described above. Note that the proportional content of each monomer in the monomer composition can be set in accordance with the desired proportional content of each monomer unit in the particulate polymer X.

A method such as solution polymerization, suspension polymerization, bulk polymerization, or emulsion polymerization can be adopted without any specific limitations as the method of polymerization. Moreover, ionic polymerization, radical polymerization, living radical polymerization, various types of condensation polymerization, addition polymerization, and so forth can be adopted as the polymerization reaction. A known amount of an emulsifier, a polymerization initiator, a molecular weight modifier, or the like can be used as necessary in the polymerization.

The proportion constituted by the particulate polymer X among all solid content in the adhesive coating liquid when all solid content is taken to be 100 mass% is preferably not less than 70 mass% and not more than 100 mass%, more preferably not less than 80 mass% and not more than 100 mass%, even more preferably not less than 90 mass% and not more than 100 mass%, and particularly preferably not less than 95 mass% and not more than 100 mass%.

### <Dispersion medium>

The presently disclosed adhesive coating liquid contains at least water as a dispersion medium. In addition, the adhesive coating liquid may contain a dispersion medium other than water. The dispersion medium other than water may be a known organic solvent that is miscible with water. The proportion constituted by water among the dispersion medium when the entire dispersion medium is taken to be 100 mass% is preferably not less than 90 mass% and not more than 100 mass%, more preferably not less than 95 mass% and not more than 100 mass%, and even more preferably not less than 99 mass% and not more than 100 mass%.

### <Other components>

Examples of components other than the above-described adhesive and dispersion medium that can be contained in the presently disclosed adhesive coating liquid include, but are not specifically limited to, dispersants, conductive materials, and so forth. One of these components may be used individually, or two or more of these components may be used in combination in a freely selected ratio.

Note that since the adhesive coating liquid is to be used to form an adhesive layer ensuring close adherence of an electrode mixed material layer and a current collector, the adhesive coating liquid does not normally contain an electrode active material that is contained in an electrode mixed material layer or non-conductive particles (alumina, etc.) that are contained in a porous membrane layer.

### <Tack strength>

The tack strength of the presently disclosed adhesive coating liquid as measured under specific conditions using a tackiness tester is required to be 0.50 N or more, is preferably 0.80 N or more, and more preferably 1.0 N or more, and is preferably 12 N or less. In a situation in which the tack strength of the adhesive coating liquid is less than 0.50 N, dusting of composite particles during electrode production cannot be inhibited.

In contrast, the presently disclosed adhesive coating liquid can sufficiently ensure high-speed formability during electrode production by powder forming as a result of having a tack strength of 0.50 N or more.

The following describes the tack strength in more detail. The acquisition of an adhesive layer having strong tack strength is possible using the previously described conventional technique, for example. Moreover, the adhesive layer having strong tack strength adheres strongly to composite particles, and thus can inhibit dusting of the composite particles. On the other hand, in a situation in which powder forming of composite particles is to be performed, a squeegee such as a squeegee roll may be used to perform leveling of the stacking thickness of the composite particles on an adhesive layer in advance of the composite particles undergoing powder forming by pressing.

Furthermore, by setting the degree of swelling in electrolyte solution of the particulate polymer X within a specific range and also setting the tack strength of the adhesive coating liquid containing this particulate polymer X as not less than a specific value according to the present disclosure, it is possible to enhance both high-speed formability during electrode production by powder forming and rate characteristics of an electrochemical device in a good balance.

### <Production method of adhesive coating liquid>

No specific limitations are placed on the method by which the presently disclosed adhesive coating liquid is produced. For example, the presently disclosed adhesive coating liquid can be obtained by mixing the various components described above by a known mixing method. In a situation in which the particulate polymer X is obtained as a water dispersion, the water dispersion of the particulate polymer X may be used in that form as the adhesive coating liquid, or other components may be added to the water dispersion as appropriate to obtain the adhesive coating liquid.

Although no specific limitations are placed on the solid content concentration of the adhesive coating liquid, the solid content concentration when the mass of the entire adhesive coating liquid is taken to be 100 mass% is preferably not less than 20 mass% and not more than 40 mass%, and more preferably not less than 25 mass% and not more than 35 mass%.

### (Adhesive layer-equipped current collector)

The presently disclosed adhesive layer-equipped current collector is a laminate that includes a current collector and an adhesive layer. Note that the adhesive layer-equipped current collector may include an adhesive layer at just one surface of the current collector or may include adhesive layers at both surfaces of the current collector.

By using an adhesive layer-equipped current collector that includes an adhesive layer formed using the presently disclosed adhesive coating liquid and a current collector, it is possible to form an electrode that can ensure high-speed formability during electrode production by powder forming and that can cause an electrochemical device to display excellent rate characteristics.

### <Current collector>

A material having electrical conductivity and electrochemical durability is used as the current collector. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. One of these materials may be used individually, or two or more of these materials may be used in combination in a freely selected ratio.

### <Adhesive layer>

The adhesive layer is formed using the presently disclosed adhesive layer coating liquid set forth above. In more detail, the adhesive layer is a layer that is obtained by removing at least some of the dispersion medium (particularly water) from the presently disclosed adhesive coating liquid and can, for example, be a dried product of the presently disclosed adhesive coating liquid.

The thickness of the adhesive layer is not specifically limited but is preferably 1 µm or less, and more preferably 0.5 µm or less.

### <Production method of adhesive layer-equipped current collector>

No specific limitations are placed on the method by which the presently disclosed adhesive layer-equipped current collector is produced. For example, the adhesive layer-equipped current collector can be produced through a step of applying the adhesive coating liquid onto at least one surface of the current collector (application step) and a step of drying the adhesive coating liquid that has been applied onto the current collector to form an adhesive layer (drying step).

No specific limitations are placed on the method by which the adhesive coating liquid is applied onto the current collector in the application step. For example, a method such as spray coating, doctor blading, reverse roll coating, direct roll coating, gravure coating, extrusion coating, or brush coating can be adopted.

Note that the thickness of a coating film of the adhesive coating liquid that is provided on the current collector can be set as appropriate according to the desired thickness or mass per unit area of the adhesive layer that is to be obtained.

The adhesive coating liquid on the current collector can be dried by any commonly known method without any specific limitations in the drying step. Examples of drying methods include drying by warm, hot, or low-humidity air, drying in a vacuum, and drying through irradiation with infrared light, electron beams, or the like. Although no specific limitations are placed on the drying conditions, the drying temperature may be not lower than 100°C and not higher than 150°C, for example, and the drying time may be not less than 1 second and not more than 10 minutes, for example.

### (Electrode for electrochemical device)

The presently disclosed electrode for an electrochemical device includes the presently disclosed adhesive layer-equipped current collector set forth above and an electrode mixed material layer. The electrode mixed material layer is formed on a surface of the adhesive layer-equipped current collector where the adhesive layer is present, and the presently disclosed electrode for an electrochemical device is a laminate in which the current collector, the adhesive layer, and the electrode mixed material layer are stacked in this order. Note that the presently disclosed electrode mixed material layer may include any constituent element other than the current collector, the adhesive layer, and the electrode mixed material layer.

Through the presently disclosed electrode, it is possible to cause an electrochemical device to display excellent rate characteristics.

### <Electrode mixed material layer>

The electrode mixed material layer contains an electrode active material and a binder for a mixed material layer and optionally contains other components.

### <<Electrode active material>>

A known electrode active material can be used without any specific limitations as the electrode active material that is contained in the electrode mixed material layer. Note that one electrode active material may be used individually, or two or more electrode active materials may be used in combination in a freely selected ratio.

A positive electrode active material that is used in a lithium ion secondary battery, for example, may be a metal oxide that includes lithium (Li), but is not specifically limited thereto. Moreover, the positive electrode active material is preferably a positive electrode active material that includes one or more selected from the group consisting of cobalt (Co), nickel (Ni), manganese (Mn), and iron (Fe) in addition to lithium (Li). Examples of such positive electrode active materials include lithium-containing cobalt oxide (LiCoO₂), lithium manganate (LiMn₂O₄), lithium-containing nickel oxide (LiNiO₂), lithium-containing complex oxides of Co-Ni-Mn, lithium-containing complex oxides of Ni-Mn-Al, lithium-containing complex oxides of Ni-Co-Al, olivine-type lithium manganese phosphate (LiMnPO₄), olivine-type lithium iron phosphate (LiFePO₄), lithium-rich spinel compounds represented by Li₁₊ₓMn₂₋ₓO₄(0 < x < 2), Li[Ni_{0.17}Li_{0.2}Co_{0.07}Mn_{0.56}]O₂, and LiNi_{0.5}Mn_{1.5}O₄.

Moreover, a negative electrode active material that is used in a lithium ion secondary battery, for example, may be a carbon-based negative electrode active material, a metal-based negative electrode active material, or a negative electrode active material that is a combination thereof.

The carbon-based negative electrode active material can be defined as an active material that includes carbon as a main framework into which lithium can be inserted (also referred to as "doping"). The carbon-based negative electrode active material may be a carbonaceous material or a graphitic material, for example.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material, for example. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher. Moreover, natural graphite that is at least partially covered by amorphous carbon at the surface thereof (amorphous-coated natural graphite) may also be used as a carbon-based negative electrode active material.

The metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti) and alloys thereof, and oxides, sulfides, nitrides, silicides, carbides, phosphides, and the like of the preceding examples. Of these metal-based negative electrode active materials, active materials containing silicon (silicon-based negative electrode active materials) are preferred. One reason for this is that the capacity of a lithium ion secondary battery can be increased through use of a silicon-based negative electrode active material.

The silicon-based negative electrode active material may be silicon (Si), a silicon-containing alloy, SiO, SiOₓ, or a composite of a Si-containing material and conductive carbon in which the Si-containing material is coated or combined with the conductive carbon, for example.

The particle diameter of the electrode active material is not specifically limited and can be the same as that of a conventionally used electrode active material.

Moreover, the amount of the electrode mixed material layer in the electrode mixed material layer can be set within a conventionally used range without any specific limitations.

### <<Binder for mixed material layer>>

A known binder can be used without any specific limitations as the binder for a mixed material layer that is contained in the electrode mixed material layer. Moreover, a binder that corresponds to the particulate polymer X contained in the presently disclosed adhesive coating liquid can be used as the binder for a mixed material layer.

Note that one binder for a mixed material layer may be used individually, or two or more binders for a mixed material layer may be used in combination in a freely selected ratio.

### <<Other components>>

Examples of components other than the above-described electrode active material and binder for a mixed material layer that can be contained in the electrode mixed material layer include, but are not specifically limited to, dispersants, conductive materials, reinforcing materials, leveling agents, thickeners, and additives for electrolyte solution. Commonly known examples of these components can be used without any specific limitations so long as they do not affect battery reactions.

One other component may be used individually, or two or more other components may be used in combination in a freely selected ratio.

### <<Production method of electrode using composite particles>>

The presently disclosed electrode is preferably produced by a method in which composite particles that have been obtained through granulation of an electrode active material and a binder for a mixed material layer are subjected to pressure forming on the surface of the adhesive layer of the presently disclosed adhesive layer-equipped current collector. In other words, the electrode mixed material layer in the presently disclosed electrode is preferably a formed product that is formed using composite particles (formed product of composite particles).

### {Composite particles}

The composite particles are a material for forming the electrode mixed material layer as described above. In the same manner as the electrode mixed material layer, the composite particles contain an electrode active material and a binder for a mixed material layer and optionally contain other components.

Moreover, the composite particles can be obtained through dry granulation of a slurry for composite particles that contains at least an electrode active material, a binder for a mixed material layer, and a dispersion medium such as water.

The method of dry granulation of the slurry for composite particles is not specifically limited and may be spray granulation, fluidized bed granulation, tumbling bed granulation, compression-type granulation, stirring-type granulation, extrusion granulation, crushing-type granulation, fluidized bed multi-functional granulation, melt granulation, or the like, for example, of which, spray granulation is preferable from a viewpoint of good drying efficiency.

Note that various conditions of the dry granulation can be set as appropriate within known ranges without any specific limitations.

Moreover, when obtaining the composite particles, classification may be performed using a sieve with an aim such as removal of coarse particles.

The volume-average particle diameter of the composite particles is not specifically limited, but is preferably 30 µm or more, more preferably 50 µm or more, and even more preferably 70 µm or more, and is preferably 200 µm or less, more preferably 180 µm or less, and even more preferably 150 µm or less.

The "volume-average particle diameter" of the composite particles referred to in the present specification can be determined as the particle diameter at which, in a particle diameter distribution obtained through dry measurement using a laser diffraction particle size analyzer, cumulative volume calculated from a small diameter end of the distribution reaches 50%. More specifically, the volume-average particle diameter of the composite particles can be measured by a method described in the EXAMPLES section.

### {Pressure forming}

No specific limitations are placed on the method by which the above-described composite particles are pressure formed to form the electrode mixed material layer on the adhesive layer. The following describes one example of a method of pressure forming using a pressure forming apparatus in which rolls are used with reference to the drawings.

A pressure forming apparatus 2 that is outlined in FIG. 1 is an apparatus in which composite particles 6 are pressure formed on an adhesive layer-equipped current collector 8 to obtain an electrode 18. The pressure forming apparatus 2 includes a hopper 4, a metering feeder 16, squeegee rolls 10, first forming rolls 12, and second forming rolls 14. Note that the squeegee rolls 10 are composed of a pair of rolls 10A and 10B, the first forming rolls 12 are composed of a pair of rolls 12A and 12B, and the second forming rolls 14 are composed of a pair of rolls 14A and 14B.

Composite particles 6 that have been supplied from the metering feeder 16 are deposited in the hopper 4. The pressure forming apparatus 2 is operated at a point at which the deposition height of the composite particles 6 inside of the hopper 4 has reached a certain value. First, the stacking thickness of the composite particles 6 on the adhesive layer-equipped current collector 8 is leveled through the squeegee rolls 10. After passing through the squeegee rolls 10, the adhesive layer-equipped current collector 8 (laminate) having the composite particles 6 adhered thereto is passed through the first forming rolls 12 and the second forming rolls 14 so as to perform pressing in a thickness direction of the laminate and obtain an electrode 18 including an electrode mixed material layer that is a formed product of the composite particles 6 on the adhesive layer.

When obtaining the presently disclosed electrode for an electrochemical device, the presently disclosed adhesive layer-equipped current collector set forth above is used as the adhesive layer-equipped current collector 8. Consequently, leveling of stacking direction thickness of the composite particles 6 through the squeegee rolls 10 can be performed well even in a situation in which the pressure forming apparatus 2 is operated at high speed.

### (Electrochemical device)

The presently disclosed electrochemical device includes the presently disclosed electrode set forth above. Moreover, the presently disclosed electrochemical device has excellent rate characteristics as a result of including the presently disclosed electrode. Note that the presently disclosed electrochemical device may be a non-aqueous secondary battery, for example, and is preferably a lithium ion secondary battery.

The following describes the configuration of a lithium ion secondary battery as one example of the presently disclosed electrochemical device. This lithium ion secondary battery includes a positive electrode, a negative electrode, an electrolyte solution, and a separator. At least one of the positive electrode and the negative electrode is the presently disclosed electrode. In other words, the lithium ion secondary battery may be a lithium ion secondary battery in which the positive electrode is the presently disclosed electrode and the negative electrode is an electrode other than the presently disclosed electrode, a lithium ion secondary battery in which the positive electrode is an electrode other than the presently disclosed electrode and the negative electrode is the presently disclosed electrode, or a lithium ion secondary battery in which the positive electrode and the negative electrode are both the presently disclosed electrode.

### <Electrode other than presently disclosed electrode>

A known electrode can be used without any specific limitations as an electrode that does not correspond to the presently disclosed electrode.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate. For example, the concentration of the electrolyte is preferably set as 0.5 mass% to 15 mass%, more preferably set as 2 mass% to 13 mass%, and even more preferably set as 5 mass% to 10 mass%. Moreover, a known additive such as fluoroethylene carbonate or ethyl methyl sulfone may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

### <Production method of lithium ion secondary battery>

The lithium ion secondary battery in accordance with the present disclosure can be produced by, for example, stacking the positive electrode and the negative electrode with the separator in-between, performing rolling, folding, or the like of the resultant stack, as necessary, in accordance with the battery shape to place the stack in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Furthermore, in the examples and comparative examples, the following methods were used to measure and evaluate the degree of swelling in electrolyte solution and glass-transition temperature of a particulate polymer, the tack strength of an adhesive coating liquid, the volume-average particle diameter of composite particles, the high-speed formability during electrode production by powder forming, the adhesiveness of an adhesive layer after electrolyte solution immersion, the electrolyte solution injectability during lithium ion secondary battery production, and the cycle characteristics and rate characteristics of a lithium ion secondary battery.

### <Degree of swelling in electrolyte solution>

A water dispersion containing a particulate polymer was loaded into a petri dish made of polytetrafluoroethylene and was dried under conditions of 24 hours at 25°C and 12 hours at 110°C to produce a film. The obtained film was cut to 1 cm-square to obtain a test specimen. The mass WO of this test specimen was measured.

The above-described test specimen was then immersed in electrolyte solution at 60°C for 72 hours. Thereafter, the test specimen was removed from the electrolyte solution, electrolyte solution on the surface of the test specimen was wiped off, and the mass W1 of the test specimen after the immersion test was measured.

The measured masses WO and W1 were used to calculate the degree of swelling in electrolyte solution S (×) by S = W1/WO.

Note that the electrolyte solution was a solution obtained by dissolving LiPF₆ as a supporting electrolyte with a concentration of 1 mol/L in a mixed solvent of ethylene carbonate (EC), diethyl carbonate (DEC), and vinylene carbonate (VC) (volume ratio: EC/DEC/VC = 68.5/30/1.5).

### <Glass-transition temperature>

A water dispersion of a particulate polymer serving as a measurement subject was dried at a temperature of 25°C for 48 hours to obtain a film-shaped measurement sample.

The measurement sample was weighed into an aluminum pan in an amount of 10 mg and was measured by a differential scanning calorimeter (produced by SII NanoTechnology Inc.; product name: EXSTAR DSC6220) under conditions stipulated in JIS Z8703 with a measurement temperature range of -100°C to 100°C and a heating rate of 10°C/min to obtain a differential scanning calorimetry (DSC) curve. Note that an empty aluminum pan was used as a reference. The temperature at which a derivative signal (DDSC) displayed a peak in this heating process was determined as the glass-transition temperature (°C).

### <Tack strength>

An adhesive coating liquid was applied onto one surface of copper foil (thickness: 10 µm) by gravure coating. The applied amount of the adhesive coating liquid was adjusted such that the mass per unit area was 0.060 mg/cm². The adhesive coating liquid on the current collector was then dried at 120°C for 1 second using a heat gun so as to remove water serving as a dispersion medium and obtain a test specimen.

The tack strength of the surface of the test specimen at a side where the adhesive coating liquid had been applied was measured by a probe tack method using a tackiness tester (TAC-1000 produced by RHESCA Co., Ltd.) including a stainless steel probe (diameter: 5 mm) in a state in which a natural rubber sheet having a durometer hardness of A70 (JIS K 6253-3) and a thickness of 3 mm had been laid underneath the obtained test specimen. Specifically, the tack strength (adhesive strength) was measured through a process of pressing and then detaching the probe with respect to the surface of the test specimen at the side where the adhesive coating liquid had been applied under the following conditions.
Atmosphere temperature: 25°C
Pressing rate: 1 mm/s
Pressing load: 2.5 MPa
Pressing holding time: 10 seconds

### <Volume-average particle diameter>

The volume-average particle diameter of composite particles was determined as the particle diameter at which, in a particle diameter distribution obtained through dry measurement using a laser diffraction particle size analyzer (SALD-3100 produced by Shimadzu Corporation) and an injection type dry measurement unit (SALD-DS21 produced by Shimadzu Corporation; used for dispersing aggregated particles to obtain primary particles), cumulative volume calculated from a small diameter end of the distribution reached 50%.

### <High-speed formability>

An electrode was produced using the powder forming apparatus illustrated in FIG. 1 under the same conditions as in Example 1 with the exception of the forming rate. In production of the electrode, the forming rate (conveyance rate of the adhesive layer-equipped current collector) was changed, the presence or absence of defects in an electrode mixed material layer of the obtained electrode caused by insufficient leveling of stacking thickness by the squeegee rolls was confirmed, and an evaluation was made by the following standard.
A: Defects not confirmed at forming rate of not less than 60 m/min and less than 90 m/min
B: Defects not confirmed at forming rate of not less than 30 m/min and less than 60 m/min, but defects confirmed at forming rate of not less than 60 m/min and less than 90 m/min
C: Defects not confirmed at forming rate of not less than 10 m/min and less than 30 m/min, but defects confirmed at forming rate of not less than 30 m/min and less than 60 m/min
D: Defects not confirmed at forming rate of not less than 0 m/min and less than 10 m/min, but defects confirmed at forming rate of not less than 10 m/min and less than 30 m/min

### <Adhesiveness after electrolyte solution immersion>

A negative electrode for a lithium ion secondary battery that was produced using 50 m of a trailing end of a produced elongated negative electrode was cut out as a rectangle of 100 mm in length and 10 mm in width to obtain a test specimen. This test specimen was immersed in electrolyte solution at a temperature of 60°C for 72 hours. Note that the electrolyte solution was a solution obtained by dissolving LiPF₆ as a supporting electrolyte with a concentration of 1 mol/L in a mixed solvent of ethylene carbonate (EC), diethyl carbonate (DEC), and vinylene carbonate (VC) (volume ratio: EC/DEC/VC = 68.5/30/1.5).

After this immersion, the test specimen was removed from the electrolyte solution, and electrolyte solution on the surface of the test specimen was wiped off. This test specimen was affixed to cellophane tape that was fixed to a test stage. During affixing, the surface at the negative electrode mixed material layer-side was arranged facing downward, and the surface at the negative electrode mixed material layer-side and an adhesive surface of the cellophane tape were brought into contact. Tape prescribed by JIS Z1522 was used as the cellophane tape.

Thereafter, one end of the current collector was pulled perpendicularly upward at a pulling speed of 100 mm/min to peel off the current collector, and the stress during this peeling was measured. Three measurements were made in this manner, an average value of the measurements was determined, and this average value was taken to be the peel strength. A larger peel strength indicates stronger close adherence of the negative electrode mixed material layer and the current collector via an adhesive layer.
A: Peel strength of 2.0 N/m or more
B: Peel strength of not less than 1.0 N/m and less than 2.0 N/m
C: Peel strength of less than 1.0 N/m

### <Electrolyte solution injectability>

Electrolyte solution was injected into a lithium ion secondary battery, the inside of the lithium ion secondary battery was depressurized to -100 kPa, and this state was maintained for 1 minute. Note that the electrolyte solution was a solution obtained by dissolving LiPF₆ as a supporting electrolyte with a concentration of 1 mol/L in a mixed solvent of ethylene carbonate (EC), diethyl carbonate (DEC), and vinylene carbonate (VC) (volume ratio: EC/DEC/VC = 68.5/30/1.5). Heat sealing was subsequently performed. After 10 minutes, the lithium ion secondary battery was disassembled, and the state of impregnation of the electrolyte solution in a negative electrode was visually confirmed. An evaluation was made by the following standard. When a larger portion of the negative electrode is impregnated with the electrolyte solution, this indicates higher electrolyte solution injectability.
A: Entire surface of negative electrode impregnated with electrolyte solution
B: Portion of negative electrode remains unimpregnated with electrolyte solution

### <Cycle characteristics>

A total of 10 negative electrodes for a lithium ion secondary battery were cut out from 50 m of a trailing end (5 negative electrodes) and 50 m of a leading end (5 negative electrodes) of a produced elongated negative electrode, and then 10 lithium ion secondary battery samples were produced by the same procedure as in Example 1. Each produced lithium ion secondary battery was subjected to a charge/discharge cycle test in which the lithium ion secondary battery was charged to 4.2 V with a constant current and subsequently charged with a constant voltage by a 0.5C constant-current constant-voltage method, and then the lithium ion secondary battery was discharged to 3.0 V with a 0.5C constant current at 60°C. The charge/discharge cycle test was performed for 100 cycles. A ratio of the discharge capacity of the 100^{th} cycle relative to the initial discharge capacity was determined as a capacity maintenance rate. Cycle characteristics were judged by the following standard based on the smallest capacity maintenance rate among the capacity maintenance rates for the 10 samples. A larger value indicates less reduction of capacity due to repeated charging and discharging.
A: Capacity maintenance rate of 90% or more
B: Capacity maintenance rate of not less than 80% and less than 90%
C: Capacity maintenance rate of not less than 70% and less than 80%
D: Capacity maintenance rate of less than 70%

### <Rate characteristics>

A lithium ion secondary battery was constant-current constant-voltage (CCCV) charged to 4.3 V in an atmosphere having a temperature of 25°C for cell preparation. The prepared cell was discharged to 3.0 V by 0.2C and 1.5C constant-current methods, and the electric capacity was determined. A discharge capacity maintenance rate expressed by the ratio of the electric capacities [= (electric capacity at 1.5C/electric capacity at 0.2C) × 100(%)] was determined. This measurement was performed for five lithium ion secondary battery cells. An average value of the discharge capacity maintenance rates of the cells was determined and was evaluated by the following standard. A larger average value for the discharge capacity maintenance rate indicates that the lithium ion secondary battery has better rate characteristics.
A: Discharge capacity maintenance rate average value of 90% or more
B: Discharge capacity maintenance rate average value of not less than 85% and less than 90%
C: Discharge capacity maintenance rate average value of not less than 80% and less than 85%
D: Discharge capacity maintenance rate average value of less than 80%

### (Example 1)

### <Production of particulate polymer X and adhesive coating liquid>

A reactor A including a stirrer was supplied with 70 parts of deionized water, 0.15 parts of polyoxyethylene lauryl ether (EMULGEN^{®} 120 (EMULGEN is a registered trademark in Japan, other countries, or both) produced by Kao Corporation) as an emulsifier, and 0.5 parts of ammonium persulfate. The gas phase was purged with nitrogen gas, and the temperature was raised to 60°C.

Meanwhile, a monomer composition was obtained in a separate vessel by mixing 50 parts of deionized water, 0.5 parts of polyoxyethylene lauryl ether (EMULGEN^{®} 120 produced by Kao Corporation) as an emulsifier, 70 parts of 2-ethylhexyl acrylate as a (meth)acrylic acid ester monomer, 25 parts of styrene as an aromatic vinyl monomer, 1.7 parts of allyl glycidyl ether as an epoxy/N-methylol cross-linkable monomer, 0.3 parts of allyl methacrylate as a polyethylenically unsaturated cross-linkable monomer, and 3 parts of acrylic acid as an acidic group-containing monomer. The monomer composition was continuously added into the above-described reactor A over 4 hours to perform polymerization. The reaction was performed at 70°C during the addition. Once the addition was complete, a further 3 hours of stirring was performed at 80°C, and then the reaction was ended to produce a water dispersion (solid content concentration: 30%) containing a particulate polymer X that was an acrylic polymer. The water dispersion of the particulate polymer X was used as an adhesive coating liquid.

Note that the degree of swelling in electrolyte solution and glass-transition temperature of the particulate polymer X were measured. In addition, the tack strength of the adhesive coating liquid was measured. The results are shown in Table 1.

### <Production of adhesive layer-equipped current collector>

The adhesive coating liquid described above was applied onto one surface of copper foil (thickness: 10 µm) serving as a current collector by gravure coating for 1,000 m with a forming rate of 20 m/min and was dried at 120°C for 2 minutes to obtain an adhesive layer-equipped current collector that included an adhesive layer on the current collector. Note that the thickness of the adhesive layer was 0.5 µm.

### <Production of composite particles for negative electrode>

A 5 MPa pressure-resistant vessel equipped with a stirrer was charged with 32 parts of styrene as an aromatic vinyl monomer, 65 parts of 1,3-butadiene as an aliphatic conjugated diene monomer, 3 parts of methacrylic acid as an acidic group-containing monomer, 4 parts of sodium dodecylbenzenesulfonate, 150 parts of deionized water, 0.4 parts of t-dodecyl mercaptan as a chain transfer agent, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a binder (styrene-butadiene copolymer) for a negative electrode mixed material layer.

A slurry for composite particles was obtained by mixing 97.7 parts of artificial graphite (average particle diameter: 24.5 µm) as a negative electrode active material, 1.6 parts in terms of solid content of the binder for a negative electrode mixed material layer, and 0.7 parts in terms of solid content of carboxymethyl cellulose (BSH-12 produced by DKS Co., Ltd.) as a thickener, further adding deionized water so as to adjust the solid content concentration to 35%, and performing mixing and dispersing.

The slurry for composite particles was supplied at 255 mL/min to a spray dryer (produced by Ohkawara Kakohki Co., Ltd.) in which a rotating disc pin-type atomizer (diameter: 84 mm) was used and was subjected to spray drying granulation under conditions of a rotation speed of 17,000 rpm, a hot air temperature of 150°C, and a particle collection outlet temperature of 90°C to obtain a powder composition.

The obtained powder composition was subjected to classification. Specifically, a sifting screen having an opening size of 125 µm was used in order to remove coarse particles on the sifting screen. In addition, particles under the sifting screen were also sifted using a 106 µm sifting screen in order to remove particles under that sifting screen. Particles remaining on the sifting screen were used as composite particles. Note that the volume-average particle diameter of the composite particles was measured and was determined to be 70 µm.

The obtained composite particles and the adhesive coating liquid described above were used to evaluate high-speed formability during electrode production by powder forming. The result is shown in Table 1.

### <Production of negative electrode>

The adhesive layer-equipped electrode and composite particles described above were used to produce a negative electrode by the following procedure using the pressure forming apparatus 2 illustrated in FIG. 1.

First, the adhesive layer-equipped current collector was set on the squeegee rolls 10 (roll diameter of rolls 10A and 10B: 50 mm), which had been heated to 50°C, such that the surface at the adhesive layer-side was at an outer side. Next, supply of the composite particles from the metering feeder 16 to the hopper 4 was initiated, and once the deposition height of the composite particles inside of the hopper 4 had reached a certain value, the pressure forming apparatus 2 was operated at a forming rate of 10 m/min so as to produce an elongated negative electrode of approximately 100 m through 10 minutes of operation.

Note that the roll diameter of each roll among the first forming rolls 12 and the second forming rolls 14 was set as 300 mm, and these rolls were heated to 100°C. The obtained elongated negative electrode was used to evaluate the adhesiveness of the adhesive layer after electrolyte solution immersion and the cycle characteristics of a lithium ion secondary battery. The results are shown in Table 1.

### <Production of positive electrode>

A slurry composition for a positive electrode was obtained by adding 2 parts in terms of solid content of polyvinylidene fluoride (PVDF; KF-1100 produced by Kureha Corporation) as a binder for a positive electrode mixed material layer to 100 parts of lithium cobalt oxide (LiCoO₂) as a positive electrode active material, further adding 6 parts of acetylene black (HS-100 produced by Denka Company Limited) and 20 parts of N-methylpyrrolidone, and performing mixing thereof in a planetary mixer. This slurry composition for a positive electrode was applied onto one surface of aluminum foil of 18 µm in thickness serving as a current collector, was dried at 120°C for 30 minutes, and was subsequently roll pressed to obtain a positive electrode (thickness: 60 µm).

### <Preparation of separator>

A separator made of a single layer of polypropylene (Celgard 2500 produced by Celgard, LLC.) was cut out as a square of 5 cm × 5 cm and was used in production of a lithium ion secondary battery described below.

### <Production of lithium ion secondary battery>

An aluminum packing case was prepared as a battery case. The positive electrode was cut out as a square of 4 cm × 4 cm and was arranged such that the surface at the current collector-side thereof was in contact with the aluminum packing case. Next, the square separator described above was arranged on the surface of the positive electrode active material layer of the positive electrode. In addition, the negative electrode was cut out as a square of 4.2 cm × 4.2 cm and was arranged on the separator such that the surface at the negative electrode mixed material layer-side of the negative electrode faced toward the separator. Thereafter, electrolyte solution was injected into the aluminum packing such that no air remained. Note that the electrolyte solution was a solution obtained by dissolving LiPF₆ as a supporting electrolyte with a concentration of 1 mol/L in a mixed solvent of ethylene carbonate (EC), diethyl carbonate (DEC), and vinylene carbonate (VC) (volume ratio: EC/DEC/VC = 68.5/30/1.5). The aluminum packing case was then closed by heat sealing at 150°C to tightly seal an opening of the aluminum packing, and thereby produce a lithium ion secondary battery. The obtained lithium ion secondary battery was used to evaluate rate characteristics. In addition, electrolyte solution injectability during lithium ion secondary battery production in the method described above was separately evaluated. The results are shown in Table 1.

### (Example 2)

A particulate polymer X and an adhesive layer coating liquid, an adhesive layer-equipped current collector, composite particles for a negative electrode, a negative electrode, a positive electrode, a separator, and a lithium ion secondary battery were prepared and various evaluations were performed in the same way as in Example 1 with the exception that in production of the particulate polymer X and the adhesive layer coating liquid, the amount of 2-ethylhexyl acrylate was changed to 80 parts and the amount of styrene was changed to 15 parts. The results are shown in Table 1.

### (Example 3)

A particulate polymer X and an adhesive layer coating liquid, an adhesive layer-equipped current collector, composite particles for a negative electrode, a negative electrode, a positive electrode, a separator, and a lithium ion secondary battery were prepared and various evaluations were performed in the same way as in Example 1 with the exception that in production of the particulate polymer X and the adhesive layer coating liquid, the amount of 2-ethylhexyl acrylate was changed to 69.3 parts and the amount of allyl methacrylate was changed to 1 part. The results are shown in Table 1.

### (Example 4)

A particulate polymer X and an adhesive layer coating liquid, an adhesive layer-equipped current collector, composite particles for a negative electrode, a negative electrode, a positive electrode, a separator, and a lithium ion secondary battery were prepared and various evaluations were performed in the same way as in Example 1 with the exception that in production of the particulate polymer X and the adhesive layer coating liquid, the amount of 2-ethylhexyl acrylate was changed to 70.2 parts and the amount of allyl methacrylate was changed to 0.1 parts. The results are shown in Table 1.

### (Example 5)

A particulate polymer X and an adhesive layer coating liquid, an adhesive layer-equipped current collector, composite particles for a negative electrode, a negative electrode, a positive electrode, a separator, and a lithium ion secondary battery were prepared and various evaluations were performed in the same way as in Example 1 with the exception that in production of the particulate polymer X and the adhesive layer coating liquid, the amount of 2-ethylhexyl acrylate was changed to 45 parts and the amount of styrene was changed to 50 parts. The results are shown in Table 1.

### (Example 6)

A particulate polymer X and an adhesive layer coating liquid, an adhesive layer-equipped current collector, composite particles for a negative electrode, a negative electrode, a positive electrode, a separator, and a lithium ion secondary battery were prepared and various evaluations were performed in the same way as in Example 1 with the exception that in production of the particulate polymer X and the adhesive layer coating liquid, the amount of 2-ethylhexyl acrylate was changed to 90 parts and the amount of styrene was changed to 5 parts. The results are shown in Table 1.

### (Example 7)

A particulate polymer and an adhesive layer coating liquid, an adhesive layer-equipped current collector, composite particles for a negative electrode, a negative electrode, a positive electrode, a separator, and a lithium ion secondary battery were prepared and various evaluations were performed in the same way as in Example 1 with the exception that in production of the particulate polymer X and the adhesive layer coating liquid, the amount of 2-ethylhexyl acrylate was changed to 88.8 parts, the amount of styrene was changed to 5 parts, and the amount of allyl methacrylate was changed to 1.5 parts. The results are shown in Table 1.

### (Comparative Example 1)

A particulate polymer and an adhesive layer coating liquid, an adhesive layer-equipped current collector, composite particles for a negative electrode, a negative electrode, a positive electrode, a separator, and a lithium ion secondary battery were prepared and various evaluations were performed in the same way as in Example 1 with the exception that in production of the particulate polymer X and the adhesive layer coating liquid, the amount of styrene was changed to 25.25 parts and the amount of allyl methacrylate was changed to 0.05 parts. The results are shown in Table 1.

### (Comparative Example 2)

A particulate polymer and an adhesive layer coating liquid, an adhesive layer-equipped current collector, composite particles for a negative electrode, a negative electrode, a positive electrode, a separator, and a lithium ion secondary battery were prepared and various evaluations were performed in the same way as in Example 1 with the exception that in production of the particulate polymer X and the adhesive layer coating liquid, the amount of 2-ethylhexyl acrylate was changed to 67.3 parts and the amount of allyl methacrylate was changed to 3 parts. The results are shown in Table 1.

### (Comparative Example 3)

A particulate polymer and an adhesive layer coating liquid, an adhesive layer-equipped current collector, composite particles for a negative electrode, a negative electrode, a positive electrode, a separator, and a lithium ion secondary battery were prepared and various evaluations were performed in the same way as in Example 1 with the exception that in production of the particulate polymer X and the adhesive layer coating liquid, the amount of 2-ethylhexyl acrylate was changed to 40 parts and the amount of styrene was changed to 55 parts. The results are shown in Table 1.

In Table 1, shown below:
"ACR" indicates acrylic polymer; and
"SBR" indicates styrene-butadiene copolymer.

**[Table 1]**

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| Adhesive coating liquid | Particulate polymer X, etc. | Type | ACR | ACR | ACR | ACR | ACR | ACR | ACR | ACR | ACR | ACR |
| | | Degree of swelling in electrolyte solution (x) | 2.0 | 3.0 | 1.0 | 2.0 | 2.0 | 2.0 | 2.0 | 10 | 2.0 | 2.0 |
| | | Glass-transition temperature [°C] | -28 | -40 | -28 | -28 | 10 | -50 | -50 | -28 | -28 | 20 |
| | Tack strength [N] | | 1.0 | 1.0 | 1.0 | 0.50 | 0.75 | 1.0 | 2.0 | 2.0 | 0.2 | 0.3 |
| Composite particles | Negative electrode active material | | Graphite | Graphite | Graphite | Graphite | Graphite | Graphite | Graphite | Graphite | Graphite | Graphite |
| | Binder | | SBR | SBR | SBR | SBR | SBR | SBR | SBR | SBR | SBR | SBR |
| High-speed formability | | | A | A | A | B | B | B | A | A | D | D |
| Adhesiveness after electrolyte solution immersion | | | A | A | B | A | A | A | A | A | C | C |
| Electrolyte solution injectability | | | A | A | B | A | A | A | A | A | A | A |
| Cycle characteristics | | | A | B | B | B | B | C | A | A | D | D |
| Rate characteristics | | | A | B | A | B | B | B | A | C | D | D |

It can be seen from Table 1 that by using the adhesive coating liquids of Examples 1 to 7 that each contain a particulate polymer X having a degree of swelling in electrolyte solution within a specific range as an adhesive and that each have a tack strength measured using a tackiness tester of not less than a specific value, it is possible to form an adhesive layer that can ensure high-speed formability during electrode production by powder forming and that can cause an electrochemical device to display excellent rate characteristics.

### INDUSTRIAL APPLICABILITY

Through the presently disclosed adhesive coating liquid, it is possible to provide an adhesive layer and an adhesive layer-equipped current collector that can ensure high-speed formability during electrode production by powder forming and that can cause an electrochemical device to display excellent rate characteristics.

Through the presently disclosed electrode for an electrochemical device, it is possible to cause an electrochemical device to display excellent rate characteristics.

The presently disclosed electrochemical device has excellent rate characteristics.

### REFERENCE SIGNS LIST

- 2: pressure forming apparatus
- 4: hopper
- 6: composite particles
- 8: adhesive layer-equipped current collector
- 10: squeegee rolls
- 12: first forming rolls
- 14: second forming rolls
- 10A, 10B, 12A, 12B, 14A, 14B: rolls
- 16: metering feeder
- 18: electrode

## Claims

1. An adhesive coating liquid for an electrochemical device comprising an adhesive and water, wherein
the adhesive includes a particulate polymer X having a degree of swelling in electrolyte solution, by mass, of not less than × 1.0 and not more than ×3.0, and
the adhesive coating liquid for an electrochemical device has a tack strength of 0.50 N or more as measured using a tackiness tester, where the tack strength is a value measured by:
applying the adhesive coating liquid for an electrochemical device onto one surface of copper foil such as to have a mass per unit area of 0.060 mg/cm²;
drying the adhesive coating liquid for an electrochemical device that has been applied onto the copper foil at 120°C for 1 second; and
after the drying, pressing a stainless steel probe of 5 mm in diameter of the tackiness tester against the surface of the copper foil where the adhesive coating liquid for an electrochemical device has been applied under conditions of an atmosphere temperature of 25°C, a pressing rate of 1 mm/s, a pressing load of 2.5 MPa, and a pressing holding time of 10 seconds in a state in which a natural rubber sheet having a durometer hardness of A70 according to JIS K 6253-3 and a thickness of 3 mm is laid underneath the copper foil.

2. The adhesive coating liquid for an electrochemical device according to claim 1, wherein the particulate polymer X has a glass-transition temperature of not lower than -40°C and not higher than 10°C.

3. An adhesive layer-equipped current collector comprising: a current collector; and an adhesive layer formed on the current collector, wherein the adhesive layer is formed using the adhesive coating liquid for an electrochemical device according to claim 1.

4. An electrode for an electrochemical device comprising: the adhesive layer-equipped current collector according to claim 3; and an electrode mixed material layer formed on a surface of the adhesive layer-equipped current collector where the adhesive layer is present, wherein the electrode mixed material layer contains an electrode active material and a binder for a mixed material layer.

5. The electrode for an electrochemical device according to claim 4, wherein the electrode mixed material layer is formed using composite particles that contain the electrode active material and the binder for a mixed material layer.

6. An electrochemical device comprising the electrode for an electrochemical device according to claim 4 or 5.
